(19) **Europäisches Patentamt / European Patent Office / Office européen des brevets**

(11) **EP 3 433 034 B1**

(12) # EUROPEAN PATENT SPECIFICATION

(45) Date of publication and mention
of the grant of the patent:
**10.04.2024   Bulletin 2024/15**

(21) Application number: **17707548.8**

(22) Date of filing: **27.02.2017**

(51) International Patent Classification (IPC):
**B08B 17/06** *(2006.01)*      **B29C 59/02** *(2006.01)*

(52) Cooperative Patent Classification (CPC):
**B08B 17/065;** B29C 2059/023; B29C 2791/009

(86) International application number:
**PCT/EP2017/054495**

(87) International publication number:
**WO 2017/162409 (28.09.2017 Gazette 2017/39)**

(54) **HOUSEHOLD APPLIANCE WITH A SELF-CLEANING SURFACE AND PROCESS FOR ITS MANUFACTURING**

HAUSHALTSGERÄT MIT EINER SELBSTREINIGENDEN OBERFLÄCHE UND VERFAHREN ZU DESSEN HERSTELLUNG

APPAREIL MÉNAGER AVEC UNE SURFACE AUTONETTOYANTE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **23.03.2016   EP 16382132**
         **23.03.2016   ES 201630352**

(43) Date of publication of application:
**30.01.2019   Bulletin 2019/05**

(73) Proprietor: **BSH Hausgeräte GmbH**
**81739 München (DE)**

(72) Inventors:
• **ARTAL LAHOZ, Maria Carmen**
**50007 Zaragoza (ES)**
• **BUNUEL MAGDALENA, Miguel Angel**
**50017 Zaragoza (ES)**
• **ESCARTIN BARDUZAL, Andres**
**50009 Zaragoza (ES)**
• **ESTER SOLA, Francisco Javier**
**50001 Zaragoza (ES)**
• **JAGDHEESH, Radhakrishnan**
**28031 Madrid (ES)**
• **MARTINEZ SOLANAS, Elena**
**50015 Zaragoza (ES)**
• **OCAÑA MORENO, Jose Luis**
**28029 Madrid (ES)**
• **OTERO GARCIA, Iñaki**
**31610 Villaba (ES)**
• **SAN MARTIN SANCHO, Roberto**
**31200 Estella (ES)**
• **URRUTIA ANGOS, David**
**50009 Zaragoza (ES)**

(56) References cited:
EP-A1- 2 669 040      WO-A2-2015/048504
US-A1- 2004 208 791      US-A1- 2013 138 103
US-A1- 2015 136 226

• **Chang Lijing: "Application Prospect of Super-hydrophobic Material Applied in Household Appliance Industry", , 25 September 2015 (2015-09-25), pages 53-57, XP055895295, Electrical appliances N°9 2015 ISSN: 1673-6079 Retrieved from the Internet: URL:https://global.cnki.net/KCMS/detail/de tail.aspx?dbcode=CJFD&dbname=CJFDLAST20 15& filename=DJDQ201509016&uniplatform=OVERS EA S_EN&v=Fkhz_7bf9nhqyg_eDVXd9JbbhASaxD 196TS _CJmkYXpJxWGCfbz-gf-hBM1u6KV8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a household appliance with at least one self-cleaning surface provided on a base material, wherein the self-cleaning surface comprises a plurality of dual micro-scale structures, and a process for its manufacturing.

Material removal from a solid substrate to form micro-scale and/or nano-scale structures is commonly known as micromachining. Laser ablation is a form of micromachining applying high energy laser beams to remove the material from the surface of the solid substrate. Altering the surface structure of a solid substrate allows altering its surface properties as well. By creating micro-scale and/or nano-scale structures, for example, the hydrophobicity of a surface can be altered as such that it becomes highly water repellent.

In nature this effect can be observed on lotus leaves, which are known for their self-cleaning properties. The surface of lotus leaves shows a distinct micro-scale and nano-scale architecture. Water has a quite high surface tension so that the water droplets assume a nearly spherical shape. A sphere has a minimal surface and therefore has least surface energy. On contact with a surface, adhesion forces result in spreading of the droplet and wetting of the surface, either complete or incomplete. The degree of wetting depends on the surface properties, such as the structure, and the surface tension of water or generally a fluid. The surface of lotus leaves shows a double structure that reduces the contact area and adhesion force between droplet and surface significantly, causing the leaves to be hydrophobic and highly water-repellent. The hierarchical double structure is formed out of characteristic papillae with 10 to 20 □m in height and 10 to 15 □m in width with epicuticular waxes superimposed.

A measure for the hydrophobicity of a surface is the contact angle of a droplet on the surface. The higher the contact angle the more hydrophobic is the surface. Surfaces with a contact angle <95° are referred to as hydrophilic and those with a contact angle >95° are referred to as hydrophobic. Surfaces with contact angles up to 160° to 180° are considered super-hydrophobic, which means that only 3% to 0.5% of the droplet area is in contact with the surface leading to the observed self-cleaning effect.

Dirt particles are picked up by water droplets rolling off the surface and thus are easily removed. If a water droplet rolls across a contaminated surface area the adhesion between the dirt particle, irrespective of its composition, and the droplet is higher than the adhesion between the particle and the surface.

Household appliances can come into contact with dust, dirt, food or human skin. This may lead to problems with cleanliness and, more importantly, hygiene as on the long term microorganisms may deposit and proliferate on the household appliance.

In general, the presence of stains on the external parts of a household appliance is related to a bad hygiene feeling. Surfaces like stainless steel or glass are often difficult to clean. Some stains, for example burnt ones, also need a great effort of cleaning by the consumer. Food stains are perceived in cooking scenarios (hobs, ovens), but also in storage home appliances as for example refrigerators.

Moreover, articles which have been soiled in various ways are in general cleaned in water-bearing household appliances. Food remains therefore arise in dishwashers and the range of dirt occurring in laundry items to be cleaned in washing machines is typically even greater. Thus, in particular at sites that are difficult to access, dirt can arise and accumulate and may be a good nutrient for microorganisms or may lead to bad odor.

It would thus be desirable to provide a household appliance with surfaces that exhibit self-cleaning properties.

Surface modified materials are known.

The publication US 2015/0136226 A1 discloses a metal or metal alloy comprising at least one surface region including a plurality of micro-scale structure shapes and a plurality of nano-scale structure shapes, wherein the at least one surface region is super-hydrophobic, wherein the at least one surface portion has a spectral reflectance of less than 60% for at least some wavelengths of electromagnetic radiation in the range of 0.1 $\mu$m to 500 $\mu$m.

The publication U. S. Patent 5, 635, 089 discloses a surface on a material having periodic conical surface structures of less than 200 microns in height and less than 100 microns in thickness. The surface comprises further valleys less than 300 microns in width between said conical surface structures.

The publication US 4, 972, 061 discloses a method of modifying the reflectivity of a surface of a material comprising the steps of irradiating the surface with a beam of coherent pulsed radiation, said pulsed radiation being at a power level sufficient to melt the surface and thereby to generate a surface plasma so that the shock wave associated with the surface plasma produces a roughening of said surface; and repeatedly scanning said beam across said surface to form successive closely spaced lines on said surface as a result of said roughening of said surface.

The publication WO 2015/048504 A2 discloses a liquid-repellent artificial surface comprising: a surface containing thereon a plurality of microstructures separated by a pitch of less than 500 $\mu$m and having a doubly re-entrant topology situated atop respective base structures and a liquid-solid contact fraction ($f_s$) of less than 50%, wherein the doubly re-entrant topology comprises a cap portion and downwardly extending lip extending from a periphery of the cap portion.

The publication US 2013/0138103 A1 discloses an electrosurgical unit with micro/nano structure, comprising: a handle; and a blade, arranged at an end of the handle, and having a micro/nano structure composed of a hybrid of micro/nano elements.

The publication US 2004/0208791 A1 discloses an ultraphobic surface comprising: a substrate having a surface with a multiplicity of substantially uniformly shaped asperities thereon, each asperity having a common asperity rise angle relative to the substrate, the asperities positioned so that the surface has a contact line density measured in meters of contact line per square meter of surface area equal to or greater than a contact line density value "$\Lambda_L$" determined according to the formula:

$$\Lambda_L = \frac{-10,330}{\gamma cos(\theta_{a,0} + \omega - 90°)}$$

where $\gamma$ is the surface tension of a liquid in contact with the surface in Newtons per meter, $\theta_{a,0}$ is the experimentally measured true advancing contact angle of the liquid on the asperity material in degrees, and $\omega$ is the asperity rise angle in degrees, wherein the surface exhibits a liquid-solid-gas interface with the liquid at a pressure of at least one atmosphere.

EP 2 669 040 A1 discloses a process for manufacturing a surface, wherein the surface exhibits structures having sizes in the sub-micrometer range. The surface comprises a material, which contains at least one ceramic, at least one inorganic glass, carbon, boron, silicon, at least one inorganic fiber and/or non-fibrous carbon and/or boron nitride containing composite material with a ceramic and/or carbon matrix, at least one metal-ceramic composite material or at least one composite material made of a metal and/or a metal alloy, which contains heat conducting carbonaceous and/or boron nitride containing particles and/or fibers and which may be coated at least partially with an oxide layer, or is chosen from a combination of at least two of those. A starting surface embracing the material, which does not yet exhibit structures having sizes in the sub-micrometer range and which is accessible for a laser irradiation and whereupon the surface structures are to be manufactured, is completely scanned by a pulsed laser beam for one or more times in such a way, that neighboring light spots of the laser beam meet without a gap or overlap, whereby the following conditions are held:

around $0.07 \leq \varepsilon <$ around 3000

$$\varepsilon = \frac{P_P^2 \cdot \sqrt{P_m} \cdot f \cdot \alpha \cdot \sqrt{t} \cdot \sqrt{\kappa}}{d^2 \cdot \sqrt{v} \cdot \sqrt{T_L} \cdot \sqrt{c_P} \cdot \sqrt{\lambda}} \cdot 10^3$$

wherein:

$P_P$: maximum impulse output of the outgoing laser radiation [kW]

$P_m$: mean impulse output of the outgoing laser radiation [W]

t: impulse length of the laser impulses [ns], whereby t is around 0.1 ns up to around 4000 ns,

f: repetition rate of the laser impulses [kHz]

v: scan speed at the surface of the work piece [mm/s]

d: diameter of the laser beam on the work piece [$\mu$m]

$\alpha$: laser radiation absorption of the irradiated material [%] under normal conditions

$\lambda$: wavelength of the laser radiation [nm], whereby $\lambda$ = around 100 nm up to 11000 nm

$T_L$: melting temperature of the material [K] at normal pressure

$c_P$: specific heat capacity [J/kg K] under normal conditions

$\kappa$: specific heat conductivity [W/m K] under normal conditions,

whereby the atmosphere, in which the process takes place, is a vacuum or a gas or gas mixture being inert with respect to the surface, with the proviso that neither before nor after scanning with the laser beam a bonding agent is applied.

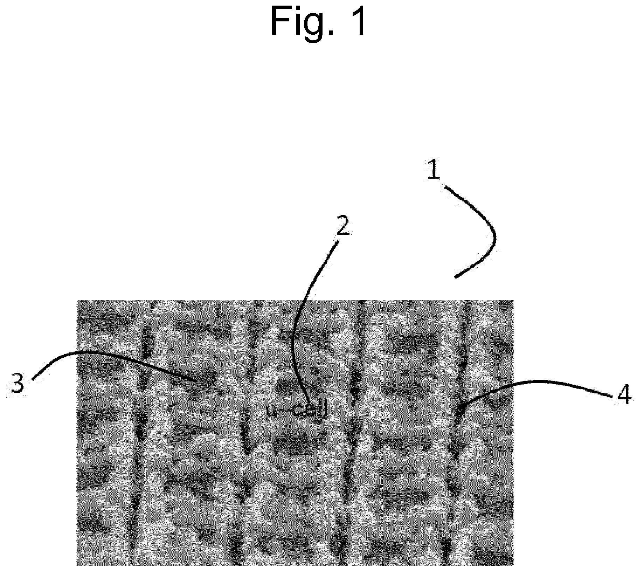

Chang Lijing: "Application Prospect of Superhydrophobic Material Applied in Household Appliance Industry", 25 September 2015, pages 53-57, in Electrical appliances No. 9, 2015 discloses in its Fig. 1 (a) and 1 (b) ill-defined protrusions. The paper contains a very general discussion of the potential uses of superhydrophobic materials in surfaces in air-conditioning apparatuses, refrigerators and freezers, on TV satellite antenna, kitchen appliances like rice cookers etc.

The publication US 2016/136226 A1 discloses superhydrophobic surfaces and methods for producing them. Disclosed is in this respect in particular the use of laser ablation.

In view of this situation it is an object underlying the present invention to provide a household appliance with improved cleaning property as well as a process for its manufacturing.

In accordance with the present invention, this object is achieved by a household appliance and a process for its manufacturing with the features of the independent claims. Preferred embodiments of the invention are detailed in the respective dependent claims. Preferred embodiments of the household appliance correspond to preferred embodiments of the process, even if they are not referred to herein in detail.

The invention is thus directed to a household appliance with at least one self-cleaning surface provided on a base material, wherein the self-cleaning surface comprises a plurality of dual micro-scale structures, wherein a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry, wherein the first geometry is a micro-pillar geometry and the second geometry is a micro-cell geometry, wherein the height of the micro-pillar is 3 to 5 times the height of the micro-cell, and wherein the widths of the micro-pillar and the micro-cell are essentially equal.

According to the present invention, a dual micro-scale structure is to be understood as a structural entity formed by two single micro-scale structures of different geometry, wherein the single micro-scale structure having a first geometry builds the base part and the single micro-scale structure having a second geometry builds the upper part. Preferably, the single micro-scale structure having the second geometry is the recast of a melt. According to the invention, the first geometry is a micro-pillar geometry and the second geometry is a micro-cell geometry.

In a preferred embodiment, the dual micro-scale structures are separated by micro-chan-nels. The shape of the micro-channels is not limited as they may be open and/or at least partially closed. However, preferably the micro-channels are closed micro-channels.

Advantageously, closed micro-channels may hold a small volume of air trapped inside acting as a micro-pillow. This micro-pillow may serve to additionally reduce the contact area between a drop of water or aqueous fluid and the self-cleaning surface.

If the dual micro-scale structures are separated by micro-channels, these micro-channels are preferably of 5 $\mu$m to 25 $\mu$m in width. More preferably, the micro-channels are 10 $\mu$m to 15 $\mu$m wide.

Preferably, the micro-channels may also form a continuous channel-network.

According to the present invention, a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry.

The size of the two single micro-scale structures forming the dual micro-scale structure is limited for example in so far, as the structure size of the two single micro-scale structures as well as the size of the dual micro-scale structure are within the micro-meter range.

More particularly, the height H1 of the single micro-scale structure having the first geometry is larger than the height H2 of the single micro-scale structure having the second geometry. Preferably, the ratio between H1 and H2 is 4:1 and more preferably 5:1.

The expression "micro-pillar" is not to be understood as limiting, but can be used interchangeably with, for example, the words micro-column, micro-stack, micro-stand, micro-strut or the like. It simply describes a solid body extending from a surface. However, in the following the word "micro-pillar" will be used.

The shape of a micro-pillar is not limited. It might be rectangular, circular or might even increase, decrease or vary in its diameter as, for example, as a conus does.

Preferably, a micro-pillar is 1 $\mu$m to 25 $\mu$m in height and 1 $\mu$m to 25 $\mu$m in width, but more preferably, 3 $\mu$m to 5 $\mu$m in height and 5 $\mu$m to 15 $\mu$m in Width.

The expression "micro-cell" is also not to be understood in a limiting way, it encompasses all structures that provide open or closed cavities such as, for example, micro-pores, micro-frames or micro-voids or the like. However, in the following the word "micro-cell" will be used.

The shape of a micro-cell is not limited. It may be circular, rectangular or it may even exhibit a complex non-uniform shape.

According to the invention, the micro-cell is located on top of the micro-pillar. The height of the micro-pillar is 3 to 5 times, even more preferably 4 times the height of the micro-cell. Moreover, the widths of the micro-pillar and the micro-cell are essentially equal.

The contact area between a droplet of water or aqueous fluid and a surface is related to the static contact angle of the droplet. The degree of the static contact angle is a measure for the hydrophobicity of a surface. A static contact angle of <95° refers to a hydrophilic surface and a contact angle of >95° refers to a hydrophobic surface. A static contact angle of 160° to 180° refers to a super-hydrophobic surface comparable with a lotus leaf.

In a preferred embodiment of the invention, the at least one self-cleaning surface has a static water contact angle of 160° to 180°. Preferably, the contact area of a droplet of water or aqueous liquid will then range between 3 % and 0.5%.

It was surprisingly found that under continuous application of water droplets the inventive self-cleaning surface is not wetted and the droplets exhibited a high degree of rolling effect when the droplets reached a critical volume on the surface. More importantly, it was found that the water droplets coalesced after striking the surface forming even bigger droplets. This so-called cascading coalescence effect observed on the inventive self-cleaning surface is exploited as such that coalescing water droplets form a liquid bridge among neighboring particles, e.g. dirt particles, and transform into clusters that move away from the surface thus removing the particles.

The base material on which the at least one self-cleaning surface is provided is not limited. It will surely depend on the household appliance and the location of the self-cleaning surface.

In a preferred embodiment, however, the at least one self-cleaning surface is provided on a base material selected from the group consisting of metals and metal alloys. More preferred, the at least one self-cleaning surface is provided on aluminum or an aluminum alloy. Even more preferred, the at least one self-cleaning surface is provided on aluminum.

In another preferred embodiment, the at least one self-cleaning surface is provided on a base material selected from the group consisting of glass, ceramics, polymers and combinations thereof. More preferred, the at least one self-cleaning surface is provided on a base material selected from the group consisting of ceramics, polymers and combinations thereof. Even more preferred, the at least one self-cleaning surface is provided on a polymer.

Furthermore, shape and size of the base material are not limited. Preferably, the base material is a foil. Such foils can be applied to relevant parts in the household appliance, for example by gluing or melt bonding. Moreover, such foils may be placed directly in an injection mould and may thus be directly utilized for the manufacture of parts of the household appliance.

The household appliance is not limited according to the invention.

However, in a preferred embodiment the inventive household appliance is used for storing, treating and/or preparing food. The expression "storing" refers in particular to storing of food in a protective environment to prevent or slow down the process of spoiling. Such protective environment may, for example, include cooling or freezing. The expression "treating" refers in particular to cutting, squeezing, stirring or kneading of food such as vegetables, fruit, cream or dough. The expression "preparing" refers in particular to cooking, baking, microwaving, extracting or fermenting of food.

In the case the household appliance is used for storing, treating and/or preparing food, it is preferably selected from a group consisting of a refrigerator, a freezer, a coffee machine, an oven, a microwave, a steamer, a food processor and a juicer.

In a preferred embodiment, the household appliance is a water-bearing household appliance. In general, a water-bearing household appliance is a household appliance during the operation of which water is used. The items to be cleaned can be, in particular, tableware or laundry items. According to the invention, cleaning should also be understood as freshening. Accordingly, a water-bearing household appliance can also be a dryer.

Preferably, if the inventive household appliance is a water-bearing household appliance, it is selected from a group consisting of a dishwasher, a washing machine, a washer-dryer and a dryer. More preferably, the water-bearing household appliance is a dishwasher.

Other inventive household appliances may be boilers, steam irons, air humidifiers, air conditioners, devices for cleaning and maintenance of floors, vacuum cleaners or kitchen hoods.

In the inventive household appliance in principle any surface can be a self-cleaning surface. The surface can be interior or exterior.

In a preferred embodiment, the self-cleaning surface is an exterior surface. An exterior surface may be an outer surface of a knob, handle, handle bar, control or a switch, for example a light switch, a handrail, a slider, control dials, slide controls or touch-sensitive (sensor active) surfaces.

An exterior surface might also be the surface of a scale or balance.

Advantageously, an exterior surface may also be the surface of a sink or a hob.

In another preferred embodiment, the self-cleaning surface is an inner wall of a container, and/or of an operating component in the household appliance.

The container might be a receiving container for items to be treated, stored and/or prepared, for example, in the interior of a cooling device, such as a refrigerator or a freezer, or the interior of an oven or a microwave. The receiving container may also be the container of a food processor, where food is treated in. Such a receiving container, however, might also be a drum in a washing machine or washer dryer or the interior of a dishwasher, where the items to be cleaned are placed in.

The container might as well be a reservoir or a dispenser. Examples include reservoirs for storing gray water in washing machines and dispenser trays for washing agents. Examples include further milk reservoirs of coffee machines, which can be cleaned more easily as remains are less likely to contaminate the walls.

The container might also be a container for temporarily storing garbage, waste or spoiled food. In this case, the self-cleaning surface also serves to improve the hygiene as contaminations are less likely to remain sticking to the surface of the container.

The operating component might be, for example, a condenser or a sieve. If the inventive household appliance is a washer dryer, the removal of fluffs accumulated on the condenser or the sieve during a drying operation can be improved and carried out more easily.

The present invention is moreover directed to a process for manufacturing a household appliance with at least one self-cleaning surface provided on a base material, wherein the self-cleaning surface comprises a plurality of dual micro-scale structures, wherein a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry, wherein the first geometry is a micro-pillar geometry and the second geometry is a micro-cell geometry, wherein the height of the micro-pillar is 3 to 5 times the height of the micro-cell, and wherein the widths of the micro-pillar and the micro-cell are essentially equal, and wherein the dual micro-scale structures are manufactured in a laser ablation process.

In a laser ablation process usually high energy beams are applied. The application of such high energy laser beams is usually carried out in a pulsed mode, wherein a pulse has a certain duration, usually ultra short, and the laser pulses are applied at a certain pulse repetition rate.

The duration and repetition rate of the high energy laser pulses in the laser ablation process is not limited. In a preferred embodiment, however, the manufacturing of the plurality of dual micro-scale structures is carried out by applying nanosecond duration pulses at a pulse repetition rate of 50 kHz to 200 kHz.

In a laser ablation process to achieve ablation, the laser power has to be high enough to exceed the ablation threshold of the material treated. The laser itself and the laser power applied are thus only limited in so far, as laser ablation using nanosecond duration laser pulses can be achieved on the base material treated.

The size and type of micro-scale structures formed in a laser ablation process may depend on the spot size and the beam displacement of the laser. These parameters are only limited as such that a plurality of dual micro-scale structures, wherein a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry, and wherein the first geometry is a micro-pillar geometry and the second geometry is a micro-cell geometry, can be manufactured in the laser ablation process.

In a preferred embodiment, however, the laser is a UV-laser operated at a power of 300 mW to 1000 mW and with beam displacements of 5 $\mu$m to 50 $\mu$m.

Generally, to manufacture a plurality of dual micro-scale structures on a surface using a laser ablation process either the laser beam may be moved across the surface to be treated or the surface may be moved. Furthermore, laser beam and surface may as well be moved relative to each other.

In a preferred embodiment of the invention, the manufacturing of the plurality of dual micro-scale structures is carried out by moving the surface in X-Y direction at a speed of 40 mm/s to 200 mm/s. Therefore, the base material on which the self-cleaning surface is to be provided may be placed on a translational X-Y stage. Preferably, the translational X-Y stage is also capable of tilting and moving in Z-direction.

In another preferred embodiment, the laser is a UV-laser operated at a power of 300 mW to 1000 mW and with beam displacements of 5 $\mu$m to 50 $\mu$m. In the laser ablation process an aluminum foil of 100 $\mu$m thickness is placed on a X-Y translational stage and the surface of the foil is subjected to nanosecond duration pulses at a pulse repetition rate of 50 kHz to 200 kHz, while the aluminum foil is moved in X and Y direction at a speed of 40 mm/s to 200 mm/s.

Preferably, the laser ablation process is carried out in a single step. The expression "single step" refers to the simultaneous manufacturing of the plurality of dual micro-scale structures, wherein a dual micro-scale structure is formed by two single micro-scale structures, wherein one single micro-scale structure has a first geometry and one single micro-scale structure has a second geometry and wherein the single micro-scale structure having the second geometry is located on top of the single micro-scale structure having the first geometry, wherein the first geometry is a micro-pillar geometry and the second geometry is a micro-cell geometry. According to the invention this may be achieved by melting a specific volume of material during the laser ablation process. The recast of the melt may then pile up on the single micro-scale structure having the first geometry to form the single micro-scale structure having the second geometry.

Preferably, the laser ablation process is a direct process. The expression "direct" refers in particular to the fact that no coating or the like is applied to the surface of the base material prior to the laser ablation process. The surface of the base material is thus directly subjected to the high energy laser pulses. However, advantageously, the surface of the material is cleaned before and after the laser ablation process with an organic solvent. Preferably the organic solvent is acetone.

A particular advantage of the present invention is that cleaning of inventive household appliances might be avoidable or at least can be carried out less frequently and with a lower impact. The self-cleaning effect is also long-lasting as it results from a permanent alteration of the surface structure of the base material. The process of manufacturing is furthermore a green and environmentally friendly one. Compared to other laser ablation techniques it is economical and can easily be adopted for industrial automation process chains. The range of base materials that can be used for manufacturing is broad and the dual micro-scale structures can be manufactured in just a single step with high precision and reproducibility.

The invention will be described below by referring to Figures 1 to 4. Figure 1 shows a plurality of dual micro-scale structures manufactured on a surface according to an embodiment of the present invention. Figure 2 shows a laser ablation workstation suitable to carry out the laser ablation process according to an embodiment of the invention. The Figures 3 and 4 show household appliances according to two embodiments of the invention. Other embodiments are conceivable.

Figure 1 depicts an SEM (scanning electron microscope) image 1 showing a plurality of microstructures manufactured on a surface in a laser ablation process. In Figure 1, the formation of micro-cells 2 on top of micro-pillars can be observed forming dual micro-scale structures 3. The micro-cells 2 are formed by the recast of melt on top of the micro-pillars. A part of the micro-pillar is still visible inside the micro-cell 2. The dual micro-scale structures 3 are furthermore separated by micro-channels 4 of 10 $\mu$m to 15 $\mu$m width.

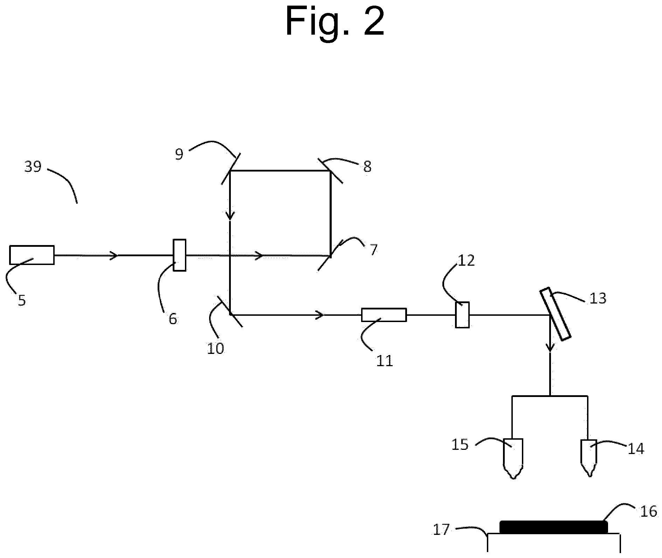

Figure 2 depicts a schematic drawing of a laser ablation workstation 39 suitable to carry out the laser ablation process according to the present invention. A nanosecond UV-laser source 5 taken through a series of optical elements directs the beam to the surface of a material 16. The laser beam is directed from the laser source 5 to an acoustic optic modulator 6 to pick the desired frequency. The laser beam is then folded by mirrors 7 to 10 to feed the beam into the beam expander 11. The laser beam is then taken through the attenuator 12 to choose the desired power. The laser beam is then focused using a translational mirror 13 into a fix optic 14 or a Galvo scanner 15 in the range of 10μm to 30 μm. The material is placed on an X-Y translational stage 17 capable of performing motions in X-Y and Z-direction as well as tilting and rotating.

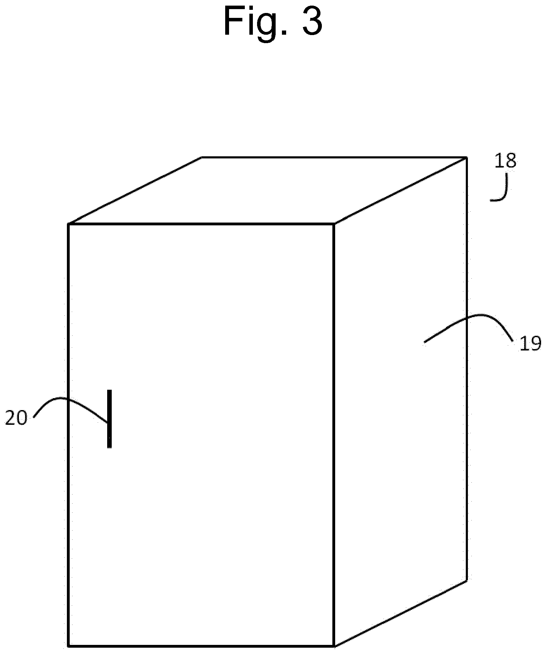

Figure 3 depicts a schematic drawing of the exterior of a refrigerator 18 as an embodiment of a household appliance according to the invention. The housing 19 of the refrigerator 18 is shown having a handle 20 to open the door of the refrigerator 18. The handle 20 is provided with a self-cleaning surface. In this way, if a user touches the handle 20 leaving dirt particles on it, the handle 20 may easily be cleaned by rinsing it with an aqueous fluid or just water.

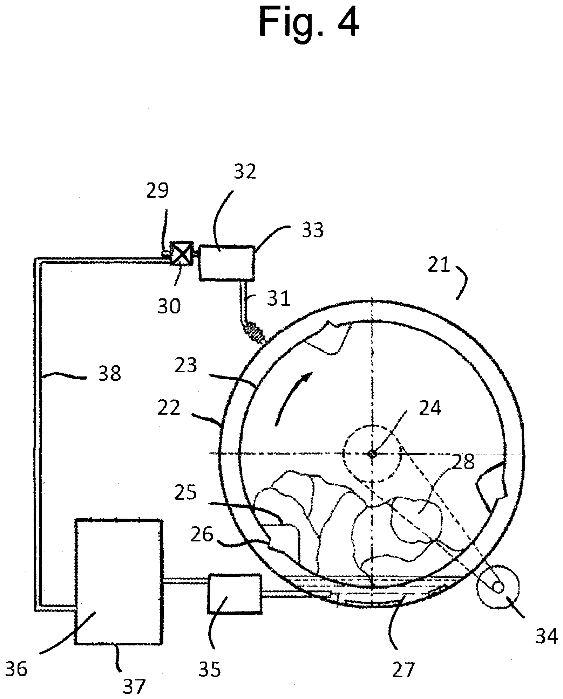

Figure 4 depicts a schematic drawing of relevant parts of a washing machine 21 as an embodiment of a household appliance according to the invention. The washing machine 21 in Figure 1 comprises a lye container 22. Inside the lye container 22 a drum 23 is rotatably mounted. The drum 23 can be operated by a drive motor 34. The rotation axis 24 of the drum 23 encloses a small angle with the horizontal for ergonomic reasons. Laundry agitators 25 and scooping devices 26 are arranged inside the drum 23. The washing machine 21 is further provided with a water supply system comprising a domestic water supply 29, a valve 30 and a feed pipe 31 connected to the lye container 22 via a detergent dispenser tray 32 for supplying a washing agent to the drum 23. The interior surfaces of the dispenser tray 32 are self-cleaning surfaces 33 comprising a plurality of dual micro-scale structures according to the present invention. Thus, if solid washing agents are used or washing agents comprising solid particles, contamination of the interior surfaces of the dispenser tray 32 by the remains of solids can be prevented. Thus, cleaning of the dispenser tray 32 is ideally not necessary.

A pump 35 for the liquid 27 inside the lye container 22 is also provided. A water reservoir 36 is able to store gray water used for rinsing the laundry items 28. Therefore the water reservoir 36 is furthermore provided with a feed pipe for rinsing water 38. The inner surfaces of the water reservoir 36 are self-cleaning surfaces 37 comprising a plurality of dual micro-scale structures according to the present invention. Gray water usually contains solid particles, originating, for example from dirt removed from the laundry items 28. In providing the water reservoir 36 with self-cleaning surfaces 37, sticking of such dirt particles to the interior surfaces of the water reservoir 36 can be prevented and the cleanliness of the water reservoir 36 can be maintained over a long period of use.

## Reference Numerals

| 1 | SEM image showing micro-cells on top of micro-pillars |
| 2 | Micro-cell |
| 3 | Dual micro-scale structure, part of micro-pillar visible inside micro-cell |
| 4 | Micro-channel |
| 5 | Nanosecond laser source (UV) |
| 6 | Acoustic optic modulator |
| 7 to 10 | Mirrors |
| 11 | Beam expander |
| 12 | Attenuator |
| 13 | Translational mirror |
| 14 | Fix optic |
| 15 | Galvo scanner |
| 16 | Surface of a material |
| 17 | X-Y translational stage |
| 18 | Household appliance, refrigerator |
| 19 | Housing |
| 20 | Exterior surface, handle with self-cleaning surface |
| 21 | Water-bearing household appliance, washing machine |
| 22 | Lye container |
| 23 | Laundry drum |
| 24 | Rotation axis of the drum |
| 25 | Laundry agitators |
| 26 | Scooping devices |
| 27 | Liquid |
| 28 | Laundry items |
| 29 | Domestic water supply |
| 30 | Valve |
| 31 | Feed pipe |
| 32 | Detergent dispenser tray |
| 33 | Self-cleaning surfaces |
| 34 | Drive motor |
| 35 | Pump |
| 36 | Water reservoir |
| 37 | Self-cleaning surfaces |
| 38 | Feed pipe for rinsing water |
| 39 | Laser ablation process, workstation for a laser ablation process |

## Claims

1. A household appliance (18, 21) with at least one self-cleaning surface (20, 33, 37) provided on a base material (16), wherein the self-cleaning surface (20, 33, 37) comprises a plurality of dual micro-scale structures (3), wherein a dual micro-scale structure (3) is formed by two single micro-scale structures, wherein one single micro-scale structure has a first geometry and one single micro-scale structure has a second geometry (2) and wherein the single micro-scale structure having the second geometry (2) is located on top of the single micro-scale structure having the first geometry, wherein the first geometry is a micro-pillar geometry and the second geometry is a micro-cell geometry (2), **characterized in that** the height of the micro-pillar is 3 to 5 times the height of the micro-cell, and **in that** the widths of the micro-pillar and the micro-cell are essentially equal.

2. Household appliance (18, 21) according to claim 1, **characterized in that** the dual micro-scale structures (3) are separated by micro-channels (4).

3. Household appliance (18, 21) according to any of the preceding claims, **characterized in that** the at least one self-cleaning surface (20, 33, 37) has a static water contact angle of 160° to 180°.

4. Household appliance (18, 21) according to any of the preceding claims, **characterized in that** the at least one self-cleaning surface (20, 33, 37) is provided on a base material (16) selected from the group consisting of metals and metal alloys.

5. Household appliance (18, 21) according to any of the preceding claims, **characterized in that** the at least one self-cleaning surface (20, 33, 37) is provided on a base material (16) selected from the group consisting of glass, ceramics, polymers and combinations thereof.

6. Household appliance (18, 21) according to any of the preceding claims, **characterized in that** the household appliance (18, 21) is a household appliance for storing, treating and/or preparing food (18).

7. Household appliance (18, 21) according to any of claims 1 to 5, **characterized in that** the household appliance (18, 21) is a dishwasher or a laundry treatment device (21).

8. Household appliance (18, 21) according to any of the preceding claims, **characterized in that** the at least one self-cleaning surface (20, 33, 37) is an exterior surface (20) of the household appliance (18, 21).

9. Household appliance (18, 21) according to any of the preceding claims, **characterized in that** the at least one self-cleaning surface (20, 33, 37) is an inner wall of a container (33, 37) and/or of an operating component in the household appliance (18, 21).

10. A process for manufacturing a household appliance (18, 21) with at least one self-cleaning surface (20, 33, 37) provided on a base material (16), wherein the self-cleaning surface (20, 33, 37) comprises a plurality of dual micro-scale structures (3), wherein a dual micro-scale structure (3) is formed by two single micro-scale structures, wherein one single micro-scale structure has a first geometry and one single micro-scale structure has a second geometry (2) and wherein the single micro-scale structure having the second geometry (2) is located on top of the single micro-scale structure having the first geometry, wherein the first geometry is a micro-pillar geometry and the second geometry is a micro-cell geometry (2), **characterized in that** the height of the micro-pillar is 3 to 5 times the height of the micro-cell, and **in that** the widths of the micro-pillar and the micro-cell are essentially equal, wherein the dual micro-scale structures (3) are manufactured in a laser ablation process.

11. Process according to claim 10, **characterized in that** the manufacturing of the plurality of dual micro-scale structures (3) is carried out by applying nanosecond duration laser pulses at a pulse repetition rate of 50 kHz to 200 kHz in the laser ablation process.

12. Process according to claim 10 or claim 11, **characterized in that** the laser (5) is a UV-laser operated at a power in the range of from 300 mW to 1000 mW and with beam displacements of 5 μm to 50 □m in the laser ablation process.

13. Process according to any of claims 10 to 12, **characterized in that** the manufacturing of the plurality of dual micro-scale structures (3) is carried out by moving the surface in X-Y direction at a speed of 40 mm/s to 200 mm/s in the laser ablation process.

**Patentansprüche**

1. Haushaltsgerät (18, 21) mit mindestens einer selbstreinigenden Oberfläche (20, 33, 37) auf einem Grundmaterial (16), wobei die selbstreinigende Oberfläche (20, 33, 37) mehrere doppelte mikroskalige Konstruktionen (3) umfasst, wobei eine doppelte mikroskalige Konstruktion (3) von zwei einzelnen mikroskaligen Konstruktionen gebildet wird, wobei eine einzelne mikroskalige Konstruktion eine erste Geometrie und eine einzelne mikroskalige Konstruktion eine zweite Geometrie (2) aufweist und sich die einzelne mikroskalige Konstruktion mit der zweiten Geometrie (3) auf der einzelnen mikroskaligen Konstruktion mit der ersten Geometrie befindet, wobei es sich bei der ersten Geometrie um eine Mikrosäulengeometrie und bei der zweiten Geometrie um eine Mikrozellengeometrie (2) handelt, **dadurch gekennzeichnet, dass** die Höhe der Mikrosäule das 3- bis 5-fache der Höhe der Mikrozelle beträgt und dass die Breite der Mikrosäule und der Mikrozelle im Wesentlichen gleich ist.

2. Haushaltsgerät (18, 21) nach Anspruch 1, **dadurch gekennzeichnet, dass** die doppelten mikroskaligen Konstruktionen (3) durch Mikrokanäle (4) getrennt sind.

3. Haushaltsgerät (18, 21) nach einem der vorhergehenden Ansprüche, **dadurch gekennzeichnet, dass** die mindestens eine selbstreinigende Oberfläche (20, 33, 37) einen statischen Wasserkontaktwinkel von 160° bis 180° aufweist.

4. Haushaltsgerät (18, 21) nach einem der vorhergehenden Ansprüche, **dadurch gekennzeichnet, dass** die mindestens eine selbstreinigende Oberfläche (20, 33, 37) auf einem Grundmaterial (16) vorgesehen ist, das aus der Gruppe ausgewählt ist, welche aus Metallen und Metalllegierungen besteht.

5. Haushaltsgerät (18, 21) nach einem der vorhergehenden Ansprüche, **dadurch gekennzeichnet, dass** die mindestens eine selbstreinigende Oberfläche (20, 33, 37) auf einem Grundmaterial (16) vorgesehen ist, das aus der Gruppe ausgewählt ist, welche aus Glas, Keramik, Polymeren und Kombinationen davon besteht.

6. Haushaltsgerät (18, 21) nach einem der vorhergehenden Ansprüche, **dadurch gekennzeichnet, dass** es sich bei dem Haushaltsgerät (18, 21) um ein Haushaltsgerät zum Aufbewahren, Behandeln und/oder Zubereiten von Lebensmitteln (18) handelt.

7. Haushaltsgerät (18, 21) nach einem der Ansprüche 1 bis 5, **dadurch gekennzeichnet, dass** es sich bei dem Haushaltsgerät (18, 21) um einen Geschirrspüler oder eine Wäschebehandlungsvorrichtung (21) handelt.

8. Haushaltsgerät (18, 21) nach einem der vorhergehenden Ansprüche, **dadurch gekennzeichnet, dass** es sich bei der mindestens einen selbstreinigenden Oberfläche (20, 33, 37) um eine Außenfläche (20) des Haushaltsgeräts (18, 21) handelt.

9. Haushaltsgerät (18, 21) nach einem der vorhergehenden Ansprüche, **dadurch gekennzeichnet, dass** es sich bei der mindestens einen selbstreinigenden Oberfläche (20, 33, 37) um eine Innenwand eines Behälters (33, 37) und/oder einer Bedienkomponente in dem Haushaltsgerät (18, 21) handelt.

10. Verfahren zum Herstellen eines Haushaltsgeräts (18, 21) mit mindestens einer selbstreinigenden Oberfläche (20, 33, 37) auf einem Grundmaterial (16), wobei die selbstreinigende Oberfläche (20, 33, 37) mehrere doppelte mikroskalige Konstruktionen (3) umfasst, wobei eine doppelte mikroskalige Konstruktion (3) von zwei einzelnen mikroskaligen Konstruktionen gebildet wird, wobei eine einzelne mikroskalige Konstruktion eine erste Geometrie und eine einzelne mikroskalige Konstruktion eine zweite Geometrie (2) aufweist und sich die einzelne mikroskalige Konstruktion mit der zweiten Geometrie (2) auf der einzelnen mikroskaligen Konstruktion mit der ersten Geometrie befindet, wobei es sich bei der ersten Geometrie um eine Mikrosäulengeometrie und bei der zweiten Geometrie um eine Mikrozellengeometrie (2) handelt, **dadurch gekennzeichnet, dass**

die Höhe der Mikrosäule das 3- bis 5-fache der Höhe der Mikrozelle beträgt und dass die Breite der Mikrosäule und der Mikrozelle im Wesentlichen gleich ist, wobei die doppelten mikroskaligen Konstruktionen (3) in einem Laserablationsprozess hergestellt werden.

11. Verfahren nach Anspruch 10, **dadurch gekennzeichnet, dass** das Herstellen der mehreren doppelten mikroskaligen Konstruktionen (3) durch Anwenden von Nanosekunden andauernden Laserpulsen im Laserablationsprozess mit einer Pulswiederholungsrate von 50 kHz bis 200 kHz erfolgt.

12. Verfahren nach Anspruch 10 oder 11, **dadurch gekennzeichnet, dass** es sich bei dem Laser (5) um einen UV-Laser handelt, der im Laserablationsprozess mit einer Leistung im Bereich von 300 mW bis 1000 mW und bei einem Strahlversatz von 5 $\mu$m bis 50 $\mu$m betrieben wird.

13. Verfahren nach einem der Ansprüche 10 bis 12, **dadurch gekennzeichnet, dass** das Herstellen der mehreren doppelten mikroskaligen Konstruktionen (3) im Laserablationsprozess durch Bewegen der Oberfläche in X-Y-Richtung mit einer Geschwindigkeit von 40 mm/s bis 200 mm/s erfolgt.

**Revendications**

1. Appareil ménager (18, 21) avec au moins une surface autonettoyante (20, 33, 37) ménagée sur un matériau de base (16), dans lequel la surface autonettoyante (20, 33, 37) comprend une pluralité de structures doubles à micro-échelle (3), dans lequel une structure double à micro-échelle (3) est formée par deux structures simples à micro-échelle, dans lequel une structure simple à micro-échelle présente une première géométrie et une structure simple à micro-échelle présente une seconde géométrie (2) et dans lequel la structure simple à micro-échelle présentant la seconde géométrie (2) est située sur le haut de la structure simple à micro-échelle présentant la première géométrie, dans lequel la première géométrie est une géométrie à micro-pilier et la seconde géométrie est une géométrie à microcellule (2), **caractérisé en ce que** la hauteur du micro-pilier est de 3 à 5 fois la hauteur de la microcellule, et **en ce que** les largeurs du micro-pilier et de la microcellule sont essentiellement égales.

2. Appareil ménager (18, 21) selon la revendication 1, **caractérisé en ce que** les structures doubles à micro-échelle (3) sont séparées par des micro-canaux (4).

3. Appareil ménager (18, 21) selon l'une quelconque des revendications précédentes, **caractérisé en ce que** la au moins une surface autonettoyante (20, 33, 37) présente un angle de contact d'eau statique compris entre 160° et 180°.

4. Appareil ménager (18, 21) selon l'une quelconque des revendications précédentes, **caractérisé en ce que** la au moins une surface autonettoyante (20, 33, 37) est ménagée sur un matériau de base (16) sélectionné dans le groupe constitué de métaux et d'alliages métalliques.

5. Appareil ménager (18, 21) selon l'une quelconque des revendications précédentes, **caractérisé en ce que** la au moins une surface autonettoyante (20, 33, 37) est ménagée sur un matériau de base (16) sélectionné dans le groupe constitué de verre, de céramique, de polymères et de combinaisons correspondantes.

6. Appareil ménager (18, 21) selon l'une quelconque des revendications précédentes, **caractérisé en ce que** l'appareil ménager (18, 21) est un appareil ménager permettant de stocker, de traiter et/ou de préparer des aliments (18).

7. Appareil ménager (18, 21) selon l'une quelconque des revendications 1 à 5, **caractérisé en ce que** l'appareil ménager (18, 21) est un lave-vaisselle ou un dispositif de traitement du linge (21).

8. Appareil ménager (18, 21) selon l'une quelconque des revendications précédentes, **caractérisé en ce que** la au moins une surface autonettoyante (20, 33, 37) est une surface extérieure (20) de l'appareil ménager (18, 21).

9. Appareil ménager (18, 21) selon l'une quelconque des revendications précédentes, **caractérisé en ce que** la au moins une surface autonettoyante (20, 33, 37) est une paroi interne d'un contenant (33, 37) et/ou d'un composant opérationnel dans l'appareil ménager (18, 21).

10. Procédé de fabrication d'un appareil ménager (18, 21) avec au moins une surface autonettoyante (20, 33, 37) ménagée sur un matériau de base (16), dans lequel la surface autonettoyante (20, 33, 37) comprend une pluralité de structures doubles à micro-échelle (3), dans lequel une structure double à micro-échelle (3) est formée par deux structures simples à micro-échelle, dans lequel une structure simple à micro-échelle présente une première géométrie et une structure simple à micro-échelle présente une seconde géométrie (2) et dans lequel la structure simple à micro-échelle présentant la seconde géométrie (2) est située sur le haut de la structure simple à micro-échelle présentant la première géométrie, dans lequel la première géométrie est une géométrie à micro-pilier et la seconde géométrie est une géométrie à microcellule (2), **caractérisé en ce que** la hauteur du micro-pilier est de 3 à 5 fois la hauteur de la microcellule, et **en ce que** les largeurs du micro-pilier et de la microcellule sont essentiellement égales, dans lequel les structures doubles à micro-échelle (3) sont fabriquées dans un processus d'ablation au laser.

11. Procédé selon la revendication 10, **caractérisé en ce que** la fabrication de la pluralité de structures doubles à micro-échelle (3) est réalisée en appliquant des impulsions laser de quelques nanosecondes de durée à un taux de répétition d'impulsion de 50 kHz à 200 kHz dans le processus d'ablation au laser.

12. Procédé selon la revendication 10 ou la revendication 11, **caractérisé en ce que** le laser (5) est un laser UV actionné à une puissance comprise dans la plage de 300 mW à 1000 mW et avec des déplacements de faisceau de 5 µm à 50 µm dans le processus d'ablation au laser.

13. Procédé selon l'une quelconque des revendications 10 à 12, **caractérisé en ce que** la fabrication de la pluralité de structures doubles à micro-échelle (3) est réalisée en déplaçant la surface dans une direction X-Y à une vitesse de 40 mm/s à 200 mm/s dans le processus d'ablation au laser.

# Fig. 1

# Fig. 2

# Fig. 3

18

19

20

# Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150136226 A1
- US 5635089 A
- US 4972061 A
- WO 2015048504 A2
- US 20130138103 A1
- US 20040208791 A1
- EP 2669040 A1
- US 2016136226 A1

**Non-patent literature cited in the description**

- **CHANG LIJING.** Application Prospect of Super-hydrophobic Material Applied in Household Appliance Industry. *Electrical appliances,* 25 September 2015, (9), 53-57